# EUROPÄISCHE PATENTSCHRIFT

(11) **EP 2 619 531 B1**
(45) Veröffentlichungstag und Bekanntmachung des Hinweises auf die Patenterteilung: **29.10.2014**
(21) Anmeldenummer: 11799379.0
(22) Anmeldetag: 23.11.2011
(51) Int. Cl.: G01J 3/42, G01J 3/02, G01N 21/35, G02B 23/26, F23N 5/00, G01N 21/85

(54) **MESSAUFBAU FÜR DIE OPTISCHE ABSORPTIONS-SPEKTROSKOPIE IN HEISSEN UMGEBUNGEN**
MEASURING ARRANGEMENT FOR OPTICAL ABSORPTION SPECTROSCOPY IN HOT ENVIRONMENTS
MONTAGE DE MESURE POUR LA SPECTROSCOPIE D'ABSORPTION OPTIQUE DANS LES ENVIRONNEMENTS CHAUDS

(30) Priorität: 26.11.2010 DE 102010062027
(43) Veröffentlichungstag der Anmeldung: 31.07.2013
(73) Patentinhaber: Siemens Aktiengesellschaft, 80333 München (DE)
(72) Erfinder: CHEN, Jia, 76437 Rastatt (DE); FLEISCHER, Maximilian, 85635 Höhenkirchen (DE); HANGAUER, Andreas, 81541 München (DE); STRZODA, Rainer, 81825 München (DE)
(86) Internationale Anmeldenummer: PCT/EP2011/070746
(87) Internationale Veröffentlichungsnummer: WO 2012/069510

(56) Entgegenhaltungen:
- US-A1- 2002 031 737
- US-A1- 2003 090 666
- US-A1- 2006 176 486
- US-A1- 2007 247 835

## Beschreibung

Die Erfindung betrifft einen Messaufbau für die optische Absorptions-Spektroskopie, insbesondere für die in-situ-Messung in heißen Umgebungen.

Die Absorptionsspektroskopie ermöglicht eine genaue und vor allem gasselektive Ermittlung des Vorhandenseins und der Konzentration von Gasen. Für die Messung wird Licht durch eine Absorptionsmessstrecke geleitet, die das auszumessende Gas enthält. Nach Durchlaufen der Absorptionsmessstrecke trifft das Licht in einen Photodetektor. Gase, die in der Absorptionsmessstrecke vorhanden sind, absorbieren Teile des Lichts. Diese Absorption trifft dabei häufig sehr spezifische Wellenlängen oder Wellenlängenbereiche und so lässt sich aus einer spektralen Analyse des vom Photodetektor aufgenommenen Lichts auf die Konzentration der absorbierenden Gase schließen.

Zur Erzeugung des Lichts und als Photodetektor werden dabei häufig Halbleiterbauelemente verwendet. Beispielsweise wird das Licht mit einer Laserdiode erzeugt und mit einer Photodiode aufgenommen. Die Halbleiterbauelemente weisen je nach Ausführung eine maximale Betriebstemperatur von unter 0°C bis zu 120°C auf. Sie können deshalb nicht direkt in oder an Kammern mit einer Temperatur oberhalb ihrer jeweiligen Betriebstemperatur verwendet werden. Soll Gas in einer heißen Kammer vermessen werden, dann werden die Lichtquelle und der Photodetektor außerhalb der Kammer in einem ausreichenden Abstand zur Kammerwand angeordnet. Das Licht der Lichtquelle durchstrahlt dann einen Teil der Kammer, wofür die Kammer zweckmäßig mit entsprechenden Fenstern versehen ist.

Nachteilig an dem genannten Aufbau ist, dass das von der Lichtquelle emittierte Licht auf dem Weg zum Photodetektor auch die Umgebungsluft durchquert. Diese Umgebungsluft verändert unter Umständen das Messergebnis. Nähert man wiederum Lichtquelle und den Photodetektor an die Kammer mit heißem Gas an, so muss dafür Sorge getragen werden, dass die maximalen Betriebstemperaturen dennoch nicht überschritten werden.

Es ist Aufgabe der vorliegenden Erfindung, eine Messvorrichtung für die optische Absorptionsspektroskopie anzugeben, mittels derer die oben genannten Probleme vermieden oder verringert werden.

Diese Aufgabe wird durch eine Messvorrichtung mit den Merkmalen von Anspruch 1 gelöst. Die Unteransprüche betreffen vorteilhafte Ausgestaltungen und Weiterbildungen der Erfindung.

Die erfindungsgemäße Messvorrichtung zur Durchführung einer optischen Spektroskopie an einem Gas oder Gasgemisch in einem Gasbehältnis umfasst wenigstens ein Befestigungselement zur Befestigung der Messvorrichtung in einer Wandung des Gasbehältnisses. Weiterhin umfasst die Messvorrichtung ein erstes und ein zweites Lichtführungselement zur Transmission von Licht. Die Lichtführungselemente durchdringen jeweils das Befestigungselement.

Weiterhin ist eine Lichtquelle zur Emission von Licht durch eine Gasmessstrecke vorgesehen. Die Lichtquelle ist dabei mit dem ersten Lichtführungselement so verbunden, dass das emittierte Licht in das erste Lichtführungselement eintritt, es durchläuft und dabei durch das Befestigungselement geführt wird und dann das erste Lichtführungselement an einer ersten Austrittsfläche wieder verlässt. Dabei muss nicht das gesamte von der Lichtquelle emittierte Licht tatsächlich in das erste Lichtführungselement eintreten. Bevorzugt werden allerdings das Lichtführungselement und die Lichtführungsquelle so zueinander ausgerichtet, dass ein überwiegender Teil des von der Lichtquelle emittierten Lichts ins Lichtführungselement eintritt.

Darüber hinaus umfasst die Messvorrichtung ein Reflexionselement. Dieses ist bevorzugt so im Bereich der ersten Austrittsfläche angebracht, dass es einen Teil des aus dem ersten Lichtführungselement kommenden Lichts zu einer zweiten Eintrittsfläche des zweiten Lichtführungselements reflektiert. Das reflektierte Licht tritt sodann wenigstens teilweise in das zweite Lichtführungselement ein, wird darin durch das Befestigungselement geführt und tritt an einer zweiten Austrittsfläche im Bereich des Photodetektors wieder aus dem zweiten Lichtführungselement aus.

Schließlich umfasst die Messvorrichtung einen Photodetektor zur Aufnahme von Teilen des Lichts nach Durchlaufen des ersten Lichtführungselements und des zweiten Lichtführungselements. Dabei ist der Photodetektor im Bereich der zweiten Austrittsfläche des zweiten Lichtführungselements angeordnet.

Für die Erfindung wurde erkannt, dass sich eine wesentliche Verbesserung bekannter Aufbauten für die optische Spektroskopie durch Lichtführungselemente ergibt. Die Lichtführungselemente durchdringen die Befestigungselemente, mit denen die gesamte Messvorrichtung am Gasbehältnis angebracht ist. Über die Lichtführungselemente wird das Licht, das zur Messung dient, also von außen in das Gasbehältnis hineingeführt und wieder herausgeführt.

Ein Vorteil der Lichtführungselemente liegt somit darin, eine Lichtleitung in das Gasbehältnis und aus dem Gasbehältnis heraus zu ermöglichen, und durch die Nähe von Lichtquelle und Photodetektor zu den Lichtführungselementen gleichzeitig den Einfluss der Umgebungsluft zu eliminieren oder gering zu halten. Damit zur gleichen Zeit eine ausreichende thermische Isolation der Lichtquelle und/oder des Photodetektors vom Gasbehältnis gegeben ist, weisen beide Lichtführungselemente eine Länge von wenigstens 1 cm auf. In einer verbesserten Ausgestaltung beträgt die Länge wenigstens 3 cm und besonders vorteilhaft ist es, wenn die Länge wenigstens 6 cm beträgt. Dabei ist mit Länge die Ausdehnung entlang des Lichtweges von der Lichtquelle durch das Befestigungselement hinein in das Gasbehältnis gemeint. Ein Lichtführungselement mit großer Länge garantiert gleichzeitig eine gute thermische Isolation und vermeidet trotzdem entgegen bekannter Lösungen lange Lichtwege durch die Umgebungsluft außerhalb des Gasbehältnisses.

Gleichzeitig ist es vorteilhaft, wenn die Lichtquelle sehr nahe am ersten Lichtführungselement angeordnet ist, so dass nur ein geringer oder gar kein Luftspalt zwischen beiden Elementen verbleibt. Dadurch wird der Einfluss von Umgebungsluft auf die Messung minimiert. Gleiches gilt für den Photodetektor. Der Photodetektor ist zweckmäßig nahe an dem zweiten Lichtführungselement angeordnet, so dass auch hier das Licht nur einen geringen Luftspalt überwinden muss, und somit ein geringer Einfluss der Umgebungsluft auf die Messung auftritt. Gemäß der Erfindung sind Lichtquelle und/oder Photodetektor direkt und ohne Luftspalt mittels Klebstoff auf dem jeweiligen Lichtführungselement aufgebracht.

Die Lichtführungselemente sind ausgestaltet zur Transmission von Licht. Die Lichtführungselemente können beispielsweise ein Mineralglas, Quarzglas oder andere lichtleitende Stoffe aufweisen. Sie können stabförmig, quaderförmig oder in anderer geometrischer Ausgestaltung realisiert sein. Sie durchdringen das Befestigungselement und dienen somit zur Führung des Lichts von außerhalb des Gasbehältnisses nach innerhalb des Gasbehältnisses oder in umgekehrter Richtung. Dabei ist zweckmäßig gleichzeitig sichergestellt, dass die Lichtführungselemente so mit dem Befestigungselement verbunden sind, dass ein gasdichter Abschluss für das Gasbehältnis erreicht ist.

Die Dicke der Lichtführungselemente beträgt bevorzugt wenigstens 6 mm, bevorzugt wenigstens 9 mm. In einer besonderen Ausgestaltung beträgt die Dicke wenigstens 12 mm. Mit Dicke ist dabei der Durchmesser bei zylindrischen Lichtführungselementen oder die Breite oder Höhe der Lichtführungselemente bei quaderförmigen Lichtführungselementen gemeint, jeweils in einer Richtung senkrecht zur Lichtlaufrichtung. Eine größere Dicke ist vorteilhaft, weil Lichtreflexe durch Reflexion des Lichts wegen Divergenz von Laserlicht weitgehend unterbleiben. Solche Reflexe, die bei einer Glasfaser erwünscht sind, da das Licht in der Faser bleiben soll, sind hier unerwünscht, da sie dem Licht verschiedene Laufwege zum Detektor ermöglichen, was wiederum wegen Interferenzerscheinungen unerwünscht ist. Die Dicke wird bevorzugt so gewählt, dass Licht aus einem Raumwinkel von typischerweise 5° bis 20° gesammelt wird.

Das Reflektionselement kann auf verschiedene Art und Weise ausgestaltet sein. In einer Alternative ist es als ebenes spiegelndes Element ausgestaltet. In einer zweiten Alternative ist es als gekrümmtes spiegelndes Element ausgestaltet. In einer weiteren, vorteilhaften Alternative ist das Reflektionselement als diffuser Reflektor ausgestaltet. Mit anderen Worten wird in der letzten Alternative das Licht nicht spiegelnd reflektiert, sondern analog zu einer weißen, matten Schicht nur diffus reflektiert.

Werden spiegelnde Reflektionselemente verwendet, haben diese den Vorteil, dass ein überwiegender Anteil des Lichts, das vom ersten Lichtführungselement kommt, auch zur zweiten Eintrittsfläche des zweiten Lichtführungselements reflektiert werden kann. Der tatsächlich reflektierte Anteil des Lichts hängt aber von der Sauberkeit der reflektierenden Fläche des Reflektionselements ab. Bei einem diffusen Reflektor hingegen wird ein geringerer Anteil des von dem ersten Lichtführungselement kommenden Lichts zum zweiten Lichtführungselement reflektiert. Im Unterschied zu den spiegelnden Reflektionselementen ist der nutzbar reflektierte Anteil hier jedoch nicht so stark von der Sauberkeit des Reflektionselements abhängig. Weiterhin ist bei einem diffusen Reflektor die Justierung des optischen Aufbaus vereinfacht.

Gemäß der Erfindung dienen die Lichtführungselemente jeweils als mechanische Träger für die Lichtquelle bzw. den Photodetektor. Mit anderen Worten ist eine anderweitige Halterung für Lichtquelle und Photodetektor unnötig. Die Lichtführungselemente sind hierzu abweichend von beispielsweise Glasfasern oder anderen Lichtwellenleitern ausgestaltet. Es handelt sich mit anderen Worten nicht um faserbasierten Lichtwellenleiter.

Vorteilhaft ist es, wenn die Lichtquelle und/oder der Photodetektor in einem Kühlkörper eingebettet sind. Der Kühlkörper kann dabei wiederum bevorzugt als Trägerelement für Lichtquelle bzw. Photodetektor dienen und seinerseits mit dem jeweiligen Lichtführungselement verbunden sein. Der Kühlkörper wiederum kann mit einer aktiven Kühleinrichtung, beispielsweise einem Ventilator, gekoppelt sein.

Vorteilhaft ist es, wenn im Bereich des Reflektionselementes eine Heizvorrichtung vorgesehen ist. Die Heizvorrichtung ist dabei zweckmäßig ausgestaltet, das Reflektionselement sowie die in das Gasbehältnis hineinragenden Teile der Lichtführungselemente auf eine Temperatur zu heizen, die wenigstens einige Grad Celsius, bevorzugt 20°C über der Temperatur des Gases im Gasbehältnis liegt. Hierdurch wird vorteilhaft die Oberfläche der Elemente freigehalten von beispielsweise Russpartikeln. Somit werden die Lebensdauer des Gesamtaufbaus bzw. die Wartungsintervalle vergrößert.

In einer alternativen Ausgestaltung sind die optischen Oberflächen mit einem geeigneten Material beschichtet, beispielsweise einem Katalysator wie Platin. Hierdurch wird vorteilhaft erreicht, dass die optischen Teile immer genügend transmissiv sind, so dass für eine Absorptionsmessung genügend Licht zur Verfügung steht.

Vorteilhaft ist es, wenn bei der Messvorrichtung parallele Flächen vermieden werden, durch die das Licht tre ten muss. Damit werden Interferenzerscheinungen verringert. So können in einer Ausführungsalternative die erste Austrittsfläche des ersten Lichtführungselements und/oder die zweite Eintrittsfläche des zweiten Lichtführungselements abgeschrägt sein. Mit anderen Worten sind die Austrittsfläche bzw. die Eintrittsfläche schräg gegenüber einem rechten Winkel zur Lichtlaufrichtung. In einer weiteren Alternative sind die erste Austrittsfläche und/oder die zweite Eintrittsfläche sphärisch oder asphärisch gekrümmt. Hierdurch wird vorteilhaft neben der Wirkung, parallele Flächen zu vermeiden, auch noch eine Fokussierung des aus- bzw. eintretenden Lichts vorgenommen. Bei der Krümmung ist es sehr vorteilhaft, wenn die Austrittsfläche bzw. Eintrittsfläche kein zur jeweiligen gegenüberliegenden Eintrittsfläche bzw. Austrittsfläche paralleles Stück aufweist. Mit anderen Worten sollte der Krümmungsausschnitt aus einer gedachten Kugel- oder Linsenoberfläche aus deren Randbereich stammen und nicht deren Mitte überstreichen.

In einer vorteilhaften Ausgestaltung der Erfindung ist das zweite Lichtführungselement abseits der jeweiligen Ein- und Austrittsfläche teilweise nach innen verspiegelt. Damit wird erreicht, dass das im Inneren des zweiten Lichtführungselements laufende Licht an den Innenflächen des Lichtführungselements gespiegelt und so im Inneren des zweiten Lichtführungselements gehalten wird, bis es die zweite Austrittsfläche erreicht. Somit wird der Anteil des Lichts, das den Photodetektor erreicht, erhöht.

Eine weitere Erhöhung der Lichtausbeute im zweiten Lichtführungselement kann erreicht werden, wenn das zweite Lichtführungselement im Bereich der zweiten Austrittsfläche eine Krümmung aufweist. Diese ist bevorzugt so gestaltet, dass das im zweiten Lichtführungselement laufende Licht auf den Photodetektor konzentriert wird. Bevorzugt ist das Koppelelement mittels entsprechende Krümmung und Verspiegelung im Bereich der Krümmung ausgestaltet als parabolischer Reflektor.

Eine analoge Ausgestaltung wie für das zweite Lichtführungselement ist auch beim ersten Lichtführungselement möglich.

Weitere Vorteile und Einzelheiten der Erfindung werden im Folgenden anhand von Ausführungsbeispielen dargestellt. Die Figuren zeigen dabei schematisch und nicht maßstabsgerecht:
- Figur 1: eine Messvorrichtung mit spiegelndem, sphärischem Reflektor,
- Figur 2: eine Messvorrichtung mit spiegelndem, planem Reflektor,
- Figur 3: eine Messvorrichtung mit diffusem Reflektor und
- Figur 4: ein abgewinkeltes Einkoppelelement.

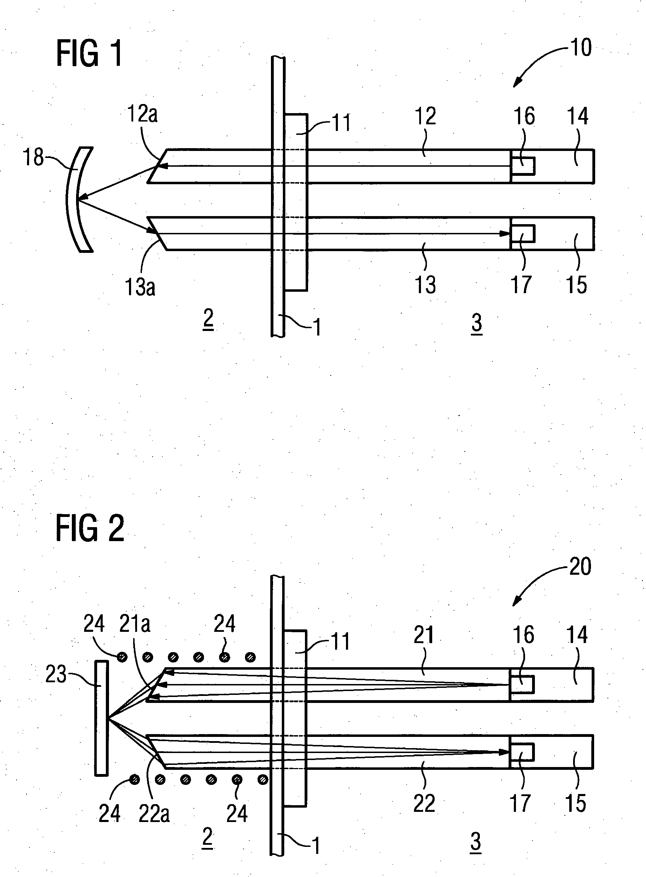

Figur 1 zeigt einen Ausschnitt aus einer Wandung 1 eines Gasbehältnisses, das mit heißem Gas 2 befüllt ist. Auf der Außenseite 3 des Gasbehältnisses herrschen normale Umgebungsbedingungen.

Die Zusammensetzung des Gases 2 bzw. die Konzentration einzelner Komponenten des Gases 2 soll mit einer ersten Messvorrichtung 10 ausgemessen werden. Die erste Messvorrichtung 10 ist mit einem Träger 11 an einer Öffnung der Wandung 1 befestigt. Der Träger 11 und die weiteren Komponenten der ersten Messvorrichtung 10 verschließen dabei die Öffnung in der Wandung 1 gasdicht. Der Träger ist in diesem Ausführungsbeispiel eine runde metallische Scheibe. Der Träger 11 wird durchdrungen von einem ersten Einkoppelelement 12 und einem ersten Auskoppelelement 13. Die Einkoppelelemente 12, 13 sind realisiert als Stäbe aus Quarzglas. Ihre Länge beträgt 60 mm und ihr Durchmesser 12 mm. Sie ragen dabei ca. 50 mm aus dem Gasbehältnis heraus und ca. 10 mm in das Gasbehältnis, also in das heiße Gas 2, hinein.

Die Verwendung von Quarzglas ist vorteilhaft, da manche Mineralgläser gegenüber korrosiven Gasen empfindlich sind. Ein chemisches Anätzen der Oberfläche durch korrosive Gase bewirkt eine Verschlechterung der optischen Transmission bzw. Reflektion. Daher ist es vorteilhaft, ein chemisch robustes Glas zu verwenden für die Koppelelemente 12, 13, 21, 22. Quarzglas weist die beste chemische Beständigkeit auf und ist daher bevorzugt zu verwenden. Eine Alternative dazu besteht darin, als Material ein Mineralglas zu wählen, und die Oberfläche durch eine Beschichtung mit einem optisch transparenten, aber chemisch stabilen Oxid zu schützen. Als Beschichtung kann beispielsweise Aluminiumoxid Al₂O₃ oder Galliumoxid Ga₂O₃ verwendet werden. Weitere Möglichkeiten sind Oberflächenbeschichtungen mit Siliziumoxid SiO₂ und Siliziumnitrid Si₃N₄.

Der Abstand zur Laserdiode 16 ist möglichst kurz, bevorzugt kleiner als 0,3 mm. Besonders bevorzugt ist es, wenn zwischen der Lichtquelle, also der Laserdiode 16, und der Koppeleinrichtung 12, 21 kein Luftspalt verbleibt.

Am außenseitigen Ende des ersten Einkoppelelements 12 ist eine Laserdiode 16 angeordnet. Die Laserdiode 16 ist in diesem Beispiel selbst in einem bekannten TO-Gehäuse aufgebaut. Das TO-Gehäuse ist dabei mit einem Stickstoff-Schutzgas gefüllt und mit einer transparenten Scheibe abgeschlossen. Die transparente Scheibe wird mittels eines Klebers am außenseitigen Ende des ersten Einkoppelelements 12 befestigt. Der Kleber ist dabei bevorzugt so gewählt, dass sein Brechungsindex dem des ersten Einkoppelelements 12 entspricht. Die Laserdiode 16 ist also abgesehen von ihrer eigenen Schutzatmosphäre direkt und ohne Luftspalt mit dem ersten Einkoppelelement 12 verbunden. In dem beschriebenen Ausführungsbeispiel weist die innere Fensteroberfläche im TO-Gehäuse eine AntireflexBeschichtung auf.

Die Laserdiode 16 ist weiterhin umgeben von einem ersten Kühlkörper 14. Das in das Gasbehältnis ragende Ende 12a des ersten Einkoppelelements 12 ist in diesem Ausführungsbeispiel abgeschrägt. Von der Laserdiode 16 ausgesandtes Licht läuft durch das erste Einkoppelelement 12 und durchdringt dabei sowohl den Träger 11 als auch die Wandung 1. An der abgeschrägten Endfläche 12a des ersten Einkoppelelements 12 wird das Licht gebrochen und auf einen sphärischen, konkaven Spiegel 18 geleitet. Der sphärische Spiegel 18 reflektiert das Licht zu einer ebenfalls abgeschrägten Endfläche 13a des ersten Auskoppelelements 13. Dort wird es durch das erste Auskoppelelement 13 wieder durch die Wandung 1 und den Träger 11 hindurchgeleitet bis zu einem Photodetektor 17, der am außenseitigen Ende des ersten Auskoppelelements 13 angebracht ist. Der Photodetektor 17 ist dabei ebenso wie die Laserdiode 16 mit einem Klebstoff am zweiten Einkoppelelement befestigt. Dabei bleibt ebenfalls kein Luftspalt bestehen. Der Photodetektor 17 ist von einem zweiten Kühlkörper 15 umgeben.

In diesem Beispiel ist der sphärische Reflektor 18 als spiegelndes Reflektionselement ausgestaltet. Die abgeschrägten Endflächen 12a, 13a der Koppelelemente 12, 13 brechen das von der Laserdiode 16 kommende Licht auf den sphärischen Reflektor 18 bzw. wieder zurück in das erste Auskoppelelement 13. Gleichzeitig vermeiden die abgeschrägten Endflächen 12a, 13a Interferenzerscheinungen durch parallele Flächen.

Zweckmäßig ist es, wenn die Kühlkörper 14, 15 noch durch einen nicht in den Figuren dargestellten Ventilator mit Kühlluft angeblasen werden. Mit diesem Aufbau und der Länge der Koppelelemente 12, 13 kann beispielsweise ein 300°C heißes Gas 2 vermessen werden, während die Laserdiode 16 und der Photodetektor 17 eine Temperatur von < 60°C aufweist.

Vorteilhaft an dem beispielhaften Aufbau ist, dass die Reflektionsgeometrie zu einer kompakten Bauform mit einer Montage an einem einzelnen Loch in der Wandung 1 führt. Eine Justierung der Optik im eingebauten Zustand ist unnötig. Die ersten Koppelelemente 12, 13 sind fest mit dem Träger 11 verbunden und halten ihrerseits die Laserdiode 16, den Photodetektor 17 und die Kühlelemente 14, 15. Dabei ist vorteilhaft, dass weitere wärmeleitende Verbindungen zwischen der Wandung 1, dem Träger 11 und der Laserdiode bzw. dem Photodetektor 16, 17 entfallen. Die vergleichsweise gute Isolation der ersten Koppelelemente 12, 13 sorgt für einen hohen Temperaturgradienten über ihre Länge. Gleichzeitig wird vorteilhaft jegliche Messung von Gasanteilen der Umgebungsluft vermieden.

Ein zweites Ausführungsbeispiel für die Erfindung zeigt Figur 2. Hierbei sind analog die Wandung 1 des Gasbehältnisses und der Träger 11 vorhanden. Weiterhin sind ebenfalls wieder die Laserdiode 16, der Photodetektor 17 und die Kühlelemente 14, 15 vorhanden. Die zweite Messvorrichtung 20 der Figur 2 unterscheidet sich von der ersten Messvorrichtung 10 der Figur 1 durch die Ausgestaltung der zweiten Koppelelemente 21, 22 sowie dem ebenen spiegelnden Reflektor 23. Ein weiterer Unterschied besteht darin, dass in der zweiten Messvorrichtung 20 auf der Seite des Trägers 11, die in das Gasbehältnis hineinragt, eine Heizung 24 vorgesehen ist.

Die Heizung 24 ist dabei als Heizwendel ausgeführt. Sie wird elektrisch betrieben und ist so ausgestaltet, dass sie die im Gasbehältnis befindlichen Komponenten, d.h. Teile der zweiten Koppeleinrichtungen 21, 22 sowie den ebenen spiegelnden Reflektor 23, auf eine Temperatur von beispielsweise 10°C oder 20°C mehr oder mehr als der Temperatur des Gases 2 aufheizen kann. Hierdurch wird vorteilhaft eine Belegung der Oberflächen mit Russpartikeln o.ä. vermieden. Die Heizwendel kann dabei um den gesamten Aufbau auf einer Seite des Trägers geführt sein. Alternativ kann die Heizwendel auch beispielsweise einzeln um jedes der Koppelelemente 2.1, 22 gewickelt sein. Neben der Belegung mit Ruß, beispielsweise beim Betrieb im Abgas von Verbrennungsanlagen, verhindert die Heizung 24 bei geeigneter Temperatur auch eine Kondensation von Wasser und Kohlenwasserstoffen. Darüber hinaus wird auch die Ablagerung von Ruß verhindert.

Die Endflächen 21a, 22a der zweiten Koppelelemente 21, 22 sind im Gegensatz zur ersten Messvorrichtung 10 gekrümmt. Bevorzugt wird als Oberfläche der Randbereich einer bevorzugt asphärischen Linse verwendet. Die Verwendung des Randbereichs vermeidet dabei über die gesamten Endflächen 21a, 22a einen Bereich, der parallel zur außenseitigen Endfläche der zweiten Koppelelemente 21, 22 ist.

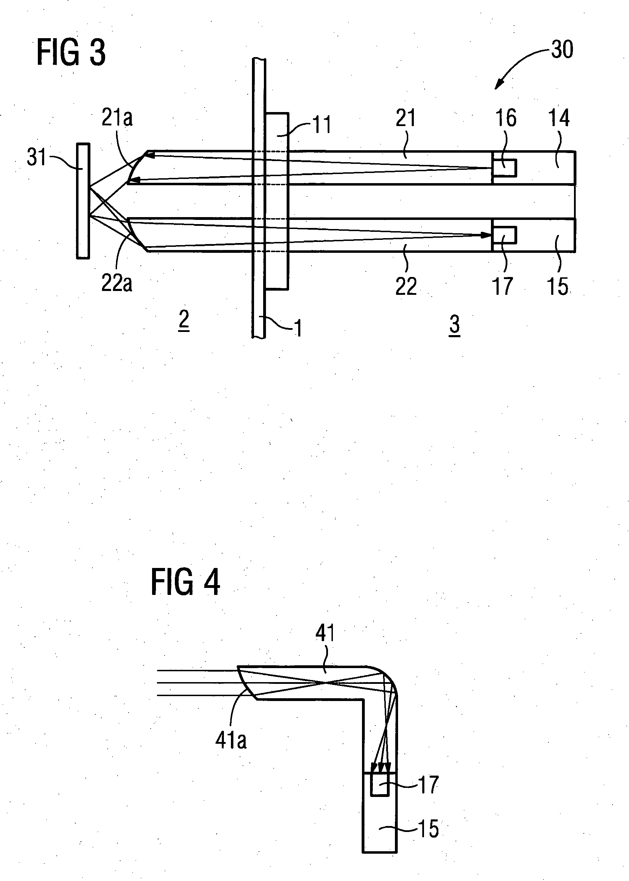

Im dritten Ausführungsbeispiel gemäß der Figur 3 ist eine dritte Messvorrichtung 30 dargestellt. Sie unterscheidet sich von der zweiten Messvorrichtung 20 dadurch, dass der planare spiegelnde Reflektor 23 durch einen diffusen Reflektor 31 ersetzt ist.

Ein vorteilhaft ausgestaltetes drittes Auskoppelelement 41 zeigt Figur 4. Hierbei ist das dritte Auskoppelelement 41 abgewinkelt ausgestaltet. Das Auskoppelelement 41 weist zwei abbildende Elemente auf, wobei eines als Reflektor ausgeführt ist. Das erste dieser Elemente stellt die Eintrittsfläche 41a dar. Das zweite Element wird durch eine innenseitige Verspiegelung der Oberfläche des Auskoppelelements 41 erreicht. Die Verspiegelung sorgt dafür, dass das Licht innerhalb des Auskoppelelements 41 bleibt. Das Licht verlässt das Auskoppelelement 41 erst bei der Austrittsfläche direkt beim Photodetektor 17. Eine Anordnung wie die gemäß Figur 4 kann neben den Auskoppelelementen 13, 22 auch für die Einkoppelelemente 12, 21 verwendet werden.

Die beschriebenen Messvorrichtungen 10, 20, 30 können zu verschiedensten Zwecken verwendet werden, z. B.:
a) Messung von Feuchte und/oder CO₂ im Garraum von Geräten zur Zubereitung von Speisen durch Erhitzen. Typischerweise treten bei diesen Geräten Temperaturen von Raumtemperatur bis etwa 300°C auf bei einem Feuchtegehalt, der bis zu 100 Vol.-% betragen kann. Im Betrieb kommt es zeitweise zur Kondensation von Feuchte und ebenso zur Kondensation von Kohlenwasserstoffen, wenn keine geeigneten Maßnahmen dagegen geschaffen werden. Die Messung erfolgt hier mittels einer Laserdiode 16 bei einer geeigneten Absorptionsbande von Wasser, beispielsweise bei ca. 950 nm, oder in einer anderen Absorptionsbande, bei der Kohlendioxid und Wasser gleichzeitig mit einer Laserdiode spektral aufgelöst gemessen werden kann, z. B. zwischen 2003 und 2004 nm.
b) Messung von Abgaskomponenten wie CO, CO₂, O₂ oder Wasser im Abgas von Feuerungsanlagen mit Laserdiodenspektroskopie, wobei eine Kondensation von Wasser (Brennwerttechnik) und/oder Verrußung auftreten können.
c) Messung des Kohlendioxidgehalts des Abgases in Verbrennungsmotoren in der Abgasrückführung mit Laserdiodenspektroskopie, beispielsweise in der Adsorptionsbande von Kohlendioxid bei ca. 2000 nm. Hier treten hohe Temperaturen und Verschmutzung durch Ruß auf.
b) Messung von Prozessgasen, beispielsweise O₂, H₂O, CO oder kurzkettige Kohlenwasserstoffe in chemischen Prozessen und Prozessgasleitungen.

## Patentansprüche

1. Messvorrichtung zur Durchführung einer optischen Spektroskopie an Gas in einem Gasbehältnis mit
- einem Befestigungselement zur Befestigung der Messvorrichtung in einer Wandung des Gasbehältnisses,
- einem ersten und zweiten Lichtführungselement zur Transmission von Licht, die jeweils das Befestigungselement durchdringen,
- einer Lichtquelle zur Emission von Licht durch eine Gasmessstrecke, wobei die Lichtquelle mit dem ersten Lichtführungselement so verbunden ist, dass das emittierte Licht in das erste Lichtführungselement eintritt, es durchläuft und dabei durch das Befestigungselement geführt wird und dann das erste Lichtführungselement an einer ersten Austrittsfläche verlässt,
- einem Reflexionselement, das so im Bereich der ersten Austrittsfläche angebracht ist, dass es einen Teil des Lichts zu einer Eintrittsfläche des zweiten Lichtführungselements reflektiert,
- einem Fotodetektor zur Aufnahme von Teilen des Lichts nach Durchlaufen des ersten Lichtführungselements und des zweiten Lichtführungselements, angeordnet im Bereich einer zweiten Austrittsfläche des zweiten Lichtführungselements, wobei
- die Länge der Lichtführungselemente entlang der Laufrichtung des Lichts wenigstens 1 cm beträgt und
- die Dicke der Lichtführungselemente in einer Richtung senkrecht zur Lichtlaufrichtung wenigstens 6 mm beträgt,
- die Lichtführungselemente jeweils als mechanischer Träger für die Lichtquelle und den Fotodetektor gestaltet sind, indem die Lichtquelle und der Fotodetektor mittels Klebstoff an jeweils einem der Lichtführungselemente befestigt sind.

2. Messvorrichtung nach einem der vorangehenden Ansprüche, bei der die Lichtführungselemente Quarzglas aufweisen.

3. Messvorrichtung nach einem der vorangehenden Ansprüche, bei der die Lichtführungselemente mit einem korrosionsbeständigen Material beschichtet sind.

4. Messvorrichtung nach einem der vorangehenden Ansprüche, bei der die Lichtquelle und/oder der Fotodetektor in einen Kühlkörper eingebettet sind.

5. Messvorrichtung nach einem der vorangehenden Ansprüche, bei der das Reflektionselement als diffuser Reflektor ausgestaltet ist.

6. Messvorrichtung nach einem der vorangehenden Ansprüche, wobei die erste Austrittsfläche und/oder die zweite Eintrittsfläche sphärisch oder asphärisch gekrümmt sind.

7. Messvorrichtung nach einem der vorangehenden Ansprüche, wobei im Bereich des Reflektionselements eine Heizvorrichtung vorhanden ist.

8. Messvorrichtung nach einem der vorangehenden Ansprüche, wobei das erste und/oder zweite Lichtführungselement abseits der Ein- und Austrittsfläche wenigstens teilweise so verspiegelt ist, dass das im Inneren laufende Licht an den Innenflächen des Lichtführungselements gespiegelt und im Inneren des Lichtführungselements gehalten wird, bis es die zweite Austrittsfläche erreicht.

9. Messvorrichtung nach einem der vorangehenden Ansprüche, wobei das erste und/oder zweite Lichtführungselement im Bereich der zweiten Austrittsfläche eine Krümmung aufweist, die so gestaltet ist, dass das im zweiten Lichtführungselement laufende Licht auf den Fotodetektor konzentriert wird.

## Claims

1. Measurement apparatus for carrying out optical spectroscopy on a gas in a gas container, comprising
- a fixing element for fixing the measurement apparatus in a wall of the gas container,
- a first and second light-guide element for transmitting light, which in each case penetrate the fixing element,
- a light source for emitting light through a gas measurement section, wherein the light source is connected to the first light-guide element such that the emitted light enters the first light-guide element, travels through it and in the process is guided through the fixing element, and then exits the first light-guide element at a first exit surface,
- a reflection element which is attached in the region of the first exit surface such that a portion of the light is reflected to an entrance surface of the second light-guide element,
- a photodetector for receiving portions of the light after it has travelled through the first light-guide element and the second light-guide element, arranged in the region of a second exit surface of the second light-guide element, wherein
- the length of the light-guide elements along the travel direction of the light is at least 1 cm and
- the thickness of the light-guide elements in a direction perpendicular to the light travel direction is at least 6 mm,
- the light-guide elements are configured in each case as a mechanical carrier for the light source and the photodetector by the light source and the photodetector being fixed to in each case one of the light-guide elements by way of an adhesive.

2. Measurement apparatus according to one of the preceding claims, in which the light-guide elements have quartz glass.

3. Measurement apparatus according to one of the preceding claims, in which the light-guide elements are coated with a corrosion-resistant material.

4. Measurement apparatus according to one of the preceding claims, in which the light source and/or the photodetector are embedded in a cooling body.

5. Measurement apparatus according to one of the preceding claims, in which the reflection element is configured as a diffuse reflector.

6. Measurement apparatus according to one of the preceding claims, wherein the first exit surface and/or the second entrance surface are curved in a spherical or aspherical manner.

7. Measurement apparatus according to one of the preceding claims, wherein a heating apparatus is present in the region of the reflection element.

8. Measurement apparatus according to one of the preceding claims, wherein the first and/or second light-guide element is at least partially rendered reflective away from the entrance and exit surfaces such that the light travelling inside is reflected at the inner surfaces of the light-guide element and kept inside the light-guide element until it reaches the second exit surface.

9. Measurement apparatus according to one of the preceding claims, wherein the first and/or second light-guide element has, in the region of the second exit surface, a curvature which is configured such that the light travelling in the second light-guide element is concentrated onto the photodetector.

## Revendications

1. Dispositif de mesure pour effectuer une spectroscopie optique sur du gaz dans un récipient de gaz, comprenant
- un élément de fixation, pour la fixation du dispositif de mesure à une paroi du récipient de gaz,
- un premier et un deuxième éléments de guidage de la lumière, pour la transmission de la lumière, qui traversent respectivement l'élément de fixation,
- une source lumineuse, pour l'émission de la lumière dans une section de mesure de gaz, la source lumineuse étant reliée au premier élément de guidage de la lumière, de manière à ce que la lumière émise entre dans le premier élément de guidage de la lumière, le traverse et ainsi soit guidée par l'élément de fixation, puis quitte le premier élément de guidage de la lumière à une premier surface de sortie,
- un élément de réflexion, qui est mis dans la région de la première surface de sortie, de manière à réfléchir une partie de la lumière vers une surface d'entrée du deuxième élément de guidage de la lumière,
- un photodétecteur de réception de parties de la lumière, après passage dans le premier élément de guidage de la lumière et dans le deuxième élément de guidage de la lumière, disposé dans la région d'une deuxième surface de sortie du deuxième élément de guidage de la lumière,
dans lequel
- la longueur des éléments de guidage de la lumière, le long de la direction de propagation de la lumière, est d'au moins de 1 cm et
- l'épaisseur des éléments de guidage de la lumière, dans une direction perpendiculairement à la direction de propagation de la lumière, est d'au moins de 6 mm,
- les éléments de guidage de la lumière sont conformés respectivement sous la forme de supports mécaniques de la source lumineuse et du photodétecteur, par le fait que la source lumineuse et le photodétecteur sont fixés au moyen de colle à respectivement l'un des éléments de guidage de la lumière.

2. Dispositif de mesure suivant l'une des revendications précédentes, dans lequel les éléments de guidage de la lumière ont du verre au quartz.

3. Dispositif de mesure suivant l'une des revendications précédentes, dans lequel les éléments de guidage de la lumière sont revêtus d'un matériau résistant à la corrosion.

4. Dispositif de mesure suivant l'une des revendications précédentes, dans lequel la source lumineuse et/ou le photodétecteur sont incorporés dans un dissipateur de chaleur.

5. Dispositif de mesure suivant l'une des revendications précédentes, dans lequel l'élément de réflexion est constitué sous la forme d'un réflecteur à diffusion.

6. Dispositif de mesure suivant l'une des revendications précédentes, dans lequel la première surface de sortie et/ou la deuxième surface d'entrée sont courbées de manière sphérique ou asphérique.

7. Dispositif de mesure suivant l'une des revendications précédentes, dans lequel il y a un dispositif de chauffage dans la zone de l'élément de réflexion.

8. Dispositif de mesure suivant l'une des revendications précédentes, dans lequel le premier et/ou le deuxième éléments de guidage de la lumière, à part la surface d'entrée et la surface de sortie, sont rendus réfléchissants au moins partiellement, en ce que la lumière se propageant à l'intérieur se réfléchit sur les surfaces intérieures de l'élément de guidage de la lumière et est retenue à l'intérieur de l'élément de guidage de la lumière jusqu'à ce qu'elle atteigne la deuxième surface de sortie.

9. Dispositif de mesure suivant l'une des revendications précédentes, dans lequel le premier et/ou le deuxième éléments de guidage de la lumière ont, dans la région de la deuxième surface de sortie, une courbure qui est telle que la lumière se propageant dans le deuxième élément de guidage de la lumière est concentrée sur le photodétecteur.
